# EUROPÄISCHE PATENTSCHRIFT

(11) **EP 2 163 799 B1**
(45) Veröffentlichungstag und Bekanntmachung des Hinweises auf die Patenterteilung: **12.01.2011**
(21) Anmeldenummer: 09011409.1
(22) Anmeldetag: 05.09.2009
(51) Int. Cl.: F16L 3/24

(54) **Haltevorrichtung für eine Sprinklerdüse**
Holding device for a sprinkler nozzle
Dispositif de retenue pour une buse d'arroseur

(30) Priorität: 13.09.2008 DE 202008012120 U
(43) Veröffentlichungstag der Anmeldung: 17.03.2010
(73) Patentinhaber: Witzenmann GmbH, 75175 Pforzheim (DE)
(72) Erfinder: Paulig, Gerd, 75248 Ölbronn-Dürrn (DE); Schmitt, Jochen, 76316 Malsch (DE)
(74) Vertreter: Lemcke, Brommer & Partner

(56) Entgegenhaltungen:
- US-A1- 2008 083 852
- US-B1- 6 341 466

## Beschreibung

Die vorliegende Erfindung betrifft eine Haltevorrichtung für eine Sprinklerdüse eines Sprinklersystems, mit einem ersten Schenkel und mit einem zweiten Schenkel, die sich zumindest in einem Montagezustand der Haltevorrichtung parallel zueinander erstrecken und an ihrem einen Ende miteinander verbunden sind, welche jeweils eine Struktur zum Aufnehmen einer Sprinklerdüse des Sprinklersystems aufweisen.

Derartige Haltevorrichtungen, die regelmäßig auch als Halteklemmen bezeichnet werden, sind bekannt. Beispielsweise offenbart die US 2008/0083852 A1 eine gattungsgemäße Haltevorrichtung, welche jedoch aufgrund ihrer speziellen Ausgestaltung nur mit besonders geformten bzw. ausgebildeten Tragstrukturen eines Sprinklersystems bzw. entsprechenden Sprinklerdüsen verwendbar ist.

Andere vorbekannte Haltevorrichtungen weisen den Nachteil auf, dass es insbesondere beim Einsatz von Sprinklerdüsen mit größeren Sprinklerrosetten oder Sprinklerabdeckungen regelmäßig erforderlich ist, die genannten Rosetten oder Abdeckungen erst nach Montage der Haltevorrichtung anzubringen, was eine anschließende Dichtigkeitsüberprüfung erforderlich macht. Da allerdings regelmäßig die Montage von Deckensystemen einschließlich der Tragstrukturen für Sprinklerdüsen den Abschluss eines Bauvorhabens bildet, wird vorteilhafterweise angestrebt, die genannte Dichtigkeitsprüfung bereits vor Installation des Deckensystems bzw. von Tragstrukturen für das Sprinklersystem vorzunehmen.

Schließlich sind auch mehrteilige Haltevorrichtungen bekannt, die jedoch unter einer relativ schlechten Handhabbarkeit besonders bei Überkopfmontage leiden.

Der Erfindung liegt die Aufgabe zugrunde, in Weiterbildung der eingangs genannten Haltevorrichtung eine einfach zu fertigende und leicht zu handhabende Haltevorrichtung anzugeben, welche auch bei bereits vollständig montierten und auf ihre Dichtigkeit überprüften Sprinklerdüsen mit quasi beliebig ausgestalteten Rosetten oder Abdeckungen zum Einsatz kommen kann.

Diese Aufgabe wird mittels einer Haltevorrichtung mit den Merkmalen des Patentanspruchs 1 gelöst. Vorteilhafte Weiterbildungen der erfindungsgemäßen Haltevorrichtung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Haltevorrichtung für eine Sprinklerdüse eines Sprinklersystems, mit einem ersten und einem zweiten Schenkel, die an einem ihrer Enden miteinander verbunden sind und sich zumindest in einem Montagezustand der Haltevorrichtung im Wesentlichen parallel zueinander erstrecken, welche jeweils eine Struktur zum Aufnehmen einer Sprinklerdüse aufweisen, **dadurch gekennzeichnet, dass** die Aufnahmestrukturen zum Aufnehmen einer quer zu den beiden Schenkeln orientierten Sprinklerdüsen ausgebildet sind und dass die beiden Schenkel an ihren dem einen Ende gegenüberliegenden freien Enden komplementäre Raststrukturen aufweisen, mittels derer die beiden Schenkel in dem Montagezustand miteinander verrastbar sind.

Unter "Montagezustand" sei hier und im Folgenden derjenige Zustand der erfindungsgemäßen Haltevorrichtung verstanden, in welchen die beiden Schenkel mit ihren jeweils komplementären Raststrukturen miteinander verrastet sind, so dass sich die beiden Schenkel der Haltevorrichtung parallel zueinander erstrecken, in welchem Zustand die erfindungsgemäße Haltevorrichtung zum Fixieren einer Sprinklerdüse eines Sprinklersystems an einer entsprechenden Tragstruktur eingesetzt bzw. einsetzbar ist, wobei die Sprinklerdüse quer zu den beiden Schenkeln, d. h. den hierdurch definierten parallelen Schenkelebenen orientiert ist.

Demnach besteht eine Besonderheit der erfindungsgemäßen Haltevorrichtung darin, dass diese den vorstehend beschriebenen geschlossenen Montagezustand einerseits sowie andererseits einen entsprechend offenen "Lieferzustand" aufweist, in welchem die komplementären Raststrukturen der beiden Schenkel jeweils frei sind, so dass zwischen den beiden Schenkeln eine Öffnung verbleibt, mit der die erfindungsgemäße Haltevorrichtung auf die bereits erwähnte Tragstruktur des Sprinklersystems aufschiebbar ist. Anschließend lässt sich die erfindungsgemäße Haltevorrichtung durch Verrasten der komplementären Raststrukturen schließen, wodurch der Montagezustand erreicht ist. Die genannte Tragstruktur, z. B. ein Vierkantrohr, ist dann zumindest abschnittsweise zwischen den Schenkeln der Haltevorrichtung aufgenommen und sichert eine quer zu den Schenkeln orientierte Sprinklerdüse, indem sie diese vorzugsweise in Richtung des Verbindungsbereichs der beiden Schenkel drückt und dort festlegt.

Vorzugsweise ist die Haltevorrichtung weiterhin derart ausgebildet, dass das vorstehend beschriebene Schließen beim Montieren der Haltevorrichtung einhändig durch den Monteur durchgeführt werden kann, was insbesondere bei der Arbeit über Kopf eine deutliche Verbesserung der Handhabbarkeit gegenüber anderen vorbekannten Haltevorrichtungen bedeutet, welche in nachteiliger Weise zwei- oder mehrteilig ausgebildet sind.

Eine vorteilhafte Weiterbildung der erfindungsgemäßen Haltevorrichtung sieht vor, dass die Struktur zum Aufnehmen der Sprinklerdüse als wenigstens eine zum freien Ende des Schenkels öffnende Ausnehmung in jedem der beiden Schenkel ausgebildet ist. Auf diese Weise ist jeder der beiden Schenkel aus wenigstens zwei Teilschenkeln gebildet, die sich im Wesentlichen parallel zueinander und parallel zu den entsprechenden Teilschenkeln des jeweils anderen Schenkels erstrecken. Definitionsgemäß öffnet die genannte Ausnehmung seitlich bezogen auf die Haltevorrichtung, so dass sich auch vollständig vormontierte Sprinklerdüsen mit quasi beliebig großen Rosetten oder Abdeckungen bzw. verdeckten Sprinklerköpfen fixieren lassen, ohne dass eine nachträgliche Dichtigkeitsprüfung erforderlich wäre.

Es wird also zunächst die quer zu den Schenkeln orientierte, vollständig vormontierte Sprinklerdüse seitlich von außen in die Ausnehmung(en) eingeführt. Dann wird die Haltevorrichtung mitsamt Sprinklerdüse auf eine ebenfalls quer zur Sprinklerdüse verlaufende Tragstruktur aufgeschoben, wobei die Tragstruktur durch die Öffnung zwischen den beiden Schenkeln bzw. den entsprechenden Teilschenkeln tritt. Schließlich wird die Haltevorrichtung durch Verrasten geschlossen, sodass die Tragstruktur ein Herausrutschen der Sprinklerdüse aus der Ausnehmung bzw. den Ausnehmungen verhindert.

Eine andere Weiterbildung der erfindungsgemäßen Haltevorrichtung sieht vor, dass jeder der genannten Teilschenkel entsprechende komplementäre Raststrukturen aufweist.

Um ein gegebenenfalls quantitativ gefordertes Drehmoment zwischen Sprinklerdüse bzw. Sprinklermuffe einerseits und Haltevorrichtung andererseits übertragen zu können, ist im Rahmen einer anderen Weiterbildung der erfindungsgemäßen Haltevorrichtung vorgesehen, dass die Ausnehmung zumindest teilweise eine Innenkontur aufweist, welche einer Außenkontur der Sprinklerdüse bzw. Sprinklermuffe entspricht.

Wie bereits erwähnt, sind die beiden Schenkel der erfindungsgemäßen Haltevorrichtung an einem Ende miteinander verbunden. Dies geschieht im Rahmen einer anderen Ausgestaltung der erfindungsgemäßen Haltevorrichtung mittels eines dritten Schenkels, so dass sich zumindest im Montagezustand ein U-förmiges Querschnittsprofil der Haltevorrichtung ergibt (im Lieferzustand weist die erfindungsgemäße Haltevorrichtung ein eher V-förmiges Querschnittsprofil auf). Dabei entspricht der Abstand zwischen den beiden Schenkeln im Wesentlichen einer entsprechenden Abmessung einer Tragstruktur des Sprinklersystems, insbesondere der Dicke eines als Tragstruktur verwendeten Vierkantrohrs des Sprinklersystems. Auf diese Weise lässt sich die Haltevorrichtung ohne Weiteres über die bereits erwähnte Öffnung zwischen den beiden Schenkeln im Lieferzustand auf die Tragstruktur des Sprinklersystems aufschieben und anschließend durch einfaches Zusammendrücken verschließen.

Im Zuge einer anderen Weiterbildung der erfindungsgemäßen Haltevorrichtung ist vorgesehen, dass zur Verstärkung wenigstens einer der beiden Schenkel wenigstens eine Versteifungsstruktur in Form einer Sicke oder Abkantung aufweist. Wenn - wie beschrieben - erste und zweite Schenkel mit mehreren Teilschenkeln zum Einsatz kommen, ist vorteilhafterweise wenigstens eine Versteifungsstruktur je Teilschenkel vorgesehen. Die genannten Versteifungsstrukturen sind vorzugsweise längs zur Erstreckung des jeweiligen Schenkels bzw. Teilschenkels ausgebildet.

Zur Ausbildung der bereits erwähnten komplementären Raststrukturen sieht eine andere Ausgestaltung der erfindungsgemäßen Haltevorrichtung vor, dass die genannten Raststrukturen einerseits aus einer Umbiegung des ersten Schenkels nach innen in Richtung des zweiten Schenkels und andererseits aus einer Abwinkelung des zweiten Schenkels in Richtung des ersten Schenkels mit endständiger Rückbiegung des zweiten Schenkels nach außen in Richtung der Abwinkelung gebildet sind. Im Montagezustand greift dabei der zweite Schenkel mit seiner Rückbiegung in die Umbiegung des ersten Schenkels ein, so dass die bereits beschriebene Verrastung bewirkt ist.

Eine andere Weiterbildung der erfindungsgemäßen Haltevorrichtung sieht vor, dass eine Abmessung der Abwinkelung im Wesentlichen dem Abstand zwischen den beiden Schenkeln im Montagezustand der Vorrichtung entspricht.

Um die Haltevorrichtung nach erfolgtem Verschließen zum Festlegen einer Sprinklerdüse an einer entsprechenden Tragstruktur einzusetzen, sieht eine andere Weiterbildung der Erfindung vor, dass im Bereich der Abwinkelung wenigstens eine Gewindestruktur zum Einschrauben eines Schraubmittels, insbesondere einer Blechschraube vorgesehen ist. Dabei kann die Gewindestruktur derart angeordnet sein, dass das Schraubmittel im Wesentlichen parallel zu den beiden Schenkeln im Montagezustand geführt ist. Das Schraubmittel lässt sich anschließend von außen in die Gewindestruktur einschrauben und sorgt so für eine kraft- bzw. formschlüssige Verbindung zwischen der Haltevorrichtung einerseits und den im Bereich zwischen deren Schenkeln bzw. im Bereich der Ausnehmung angeordneten weiteren Elementen des Sprinklersystems, nämlich der Sprinklerdüse und der bereits mehrfach erwähnten Tragstruktur, indem es die Tragstruktur gegen die Sprinklerdüse und diese weiter in Richtung des dritten Schenkels bzw. des Verbindungsendes der ersten und zweiten Schenkel der Haltevorrichtung drückt. Hierbei ist das Vorsehen mehrer Teilschenkel mit eigenem Schraubmittel vorteilhaft bei der Aufnahme von Drehmomenten.

Das bzw. die Schraubmittel ist bzw. sind vorzugsweise im Lieferzustand unverlierbar in den genannten Gewindestrukturen gehalten.

Weitere Eigenschaften und Vorteile der vorliegenden Erfindung ergeben sich aus der nachfolgenden Beschreibung von Ausführungsbeispielen anhand der Zeichnung.
- Figur 1: zeigt eine Seitenansicht der erfindungsgemäßen Haltevorrichtung im offenen Lieferzustand;
- Figur 2: zeigt eine Draufsicht auf die erfindungsgemäße Haltevorrichtung;
- Figur 3: zeigt eine im Wesentlichen der Figur 1 entsprechende Seitenansicht der erfindungsgemäßen Haltevorrichtung im geschlossenen Monta- gezustand;
- Figur 4: zeigt eine Verwendung der erfindungsgemäßen Haltevorrichtung zum Festlegen einer Sprinklerdüse an einer Tragstruktur eines Sprinklersystems, wobei sich die Haltevorrichtung in ihrem offenen Zustand befindet; und
- Figur 5: zeigt die Verwendung gemäß Figur 4 mit der Haltevorrichtung in ih- rem geschlossenen Zustand.

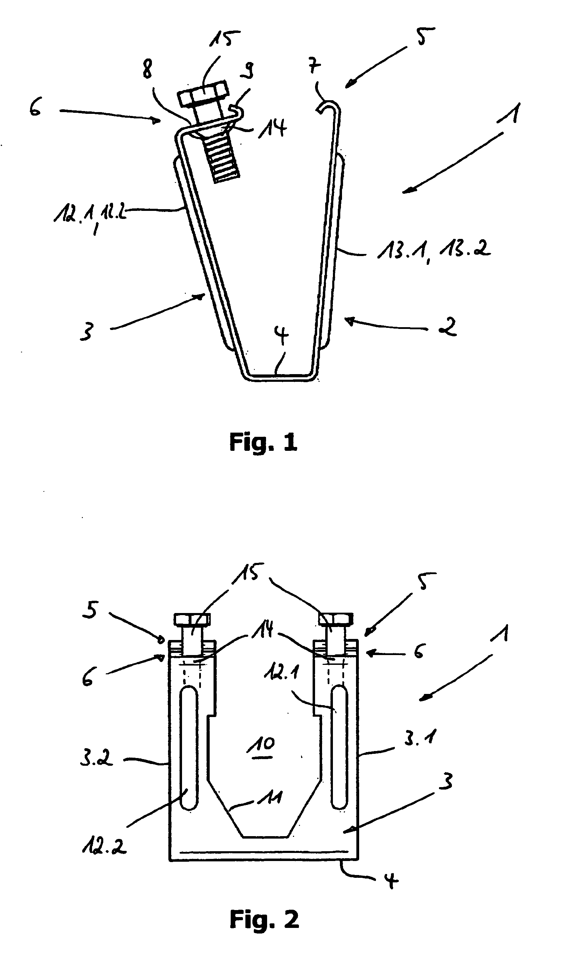

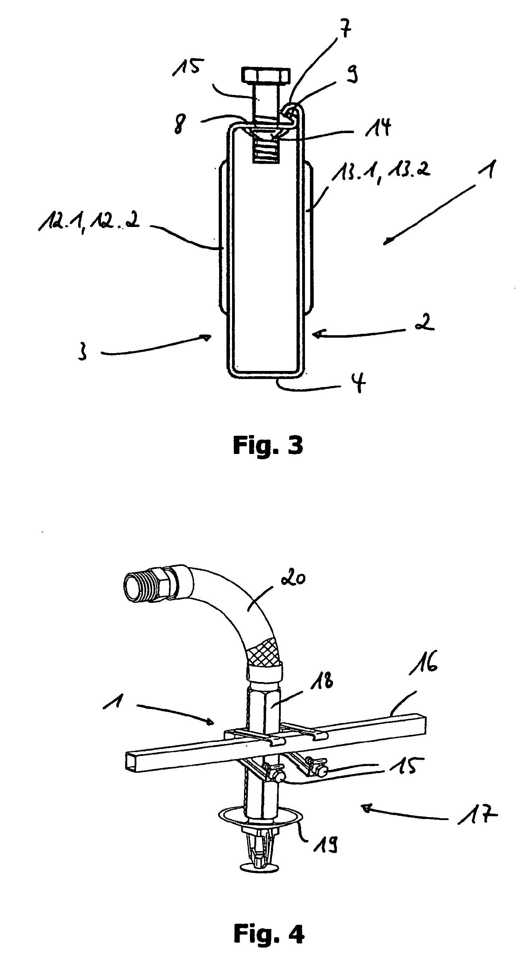

Eine erfindungsgemäße Haltevorrichtung ist in den nachfolgenden beschriebenen Figuren in ihrer Gesamtheit mit dem Bezugszeichen 1 versehen. Figur 1 zeigt eine seitliche Ansicht der Haltevorrichtung 1 in ihrem offenen Zustand, dem so genannten Lieferzustand, worauf weiter unten noch genauer eingegangen wird. Der Lieferzustand unterscheidet sich vor dem geschlossenen Montagezustand der Haltevorrichtung 1, wie er beispielsweise in Figur 3 gezeigt ist, worauf ebenfalls weiter unten noch genauer eingegangen wird.

Die Haltevorrichtung 1 ist gebildet aus einem ersten Schenkel 2 und einem zweiten Schenkel 3, welche im Wesentlichen nach Art eines Buchstabens U bzw. im Falle des offenen Zustands gemäß Figur 1 nach Art eines Buchstabens V über einen dritten Schenkel 4 miteinander verbunden sind. An ihren freien Enden weisen der erste Schenkel 2 und der zweite Schenkel 3 jeweils komplementäre Raststrukturen 5 bzw. 6 auf, auf die nachfolgend genauer eingegangen wird.

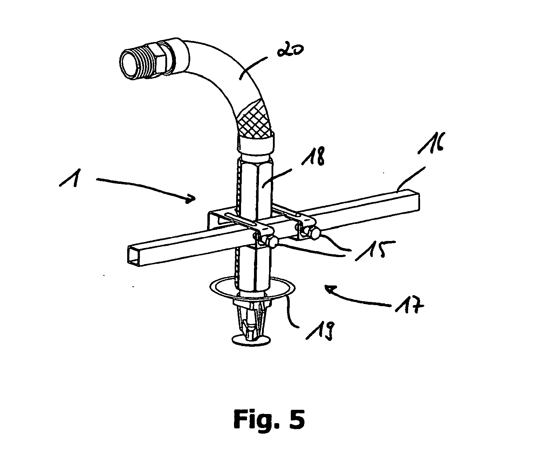

Im Falle des ersten Schenkels 2 ist die Raststruktur 5 gebildet durch eine Umbiegung 7 des ersten Schenkels 2 nach innen bezogen auf die Haltevorrichtung 1 und in Richtung des zweiten Schenkels 3. Im Falle des zweiten Schenkels 3 ist die Raststruktur 6 gebildet aus einer Abwinkelung 8 des zweiten Schenkels 3 rechtwinklig zu dessen Erstreckung und nach innen bezogen auf die Haltevorrichtung 1, das heißt in Richtung des ersten Schenkels 2. An die Abwinkelung 8 des zweiten Schenkels 3 schließt sich eine endständige Rückbiegung 9 des zweiten Schenkels 3 nach außen bezogen auf die Haltevorrichtung 1 an, so dass die bereits erwähnten komplementären Raststrukturen 5 und 6 gebildet sind, wobei zum Verrasten der zweite Schenkel 3 mit seiner Rückbiegung 9 hinter die Umbiegung 7 des ersten Schenkels 2 greift. Dies ist in den Figuren 3 und 5 noch genauer dargestellt.

Wie die Draufsicht gemäß Figur 2 verdeutlicht, weist die Haltevorrichtung 1 in dem zweiten Schenkel 3 sowie deckungsgleich in dem dahinterliegenden ersten Schenkel 2 eine Ausnehmung 10 auf, welche gemäß den Figuren 4 und 5 zum Aufnehmen einer Sprinklerdüse bzw. einer entsprechenden Muffe dient, worauf noch genauer einzugehen ist. Die Ausnehmung 10 öffnet im Bereich der Raststrukturen 5, 6 nach außen, so dass von dort die genannte Sprinklerdüse seitlich in die Ausnehmung 10 der Haltevorrichtung 1 eingeführt bzw. die Haltevorrichtung 1 seitlich auf eine Sprinklerdüse aufgeschoben werden kann, wenn die Sprinklerdüse quer zu den Ebenen der Schenkel 2, 3 orientiert ist (vgl. Figuren 4 und 5).

Die Ausnehmung 10 weist eine mehreckige Innenkontur 11 auf, welche vorzugsweise an eine entsprechende Außenkontur der Sprinklerdüse angepasst ist, so dass sich ein entsprechender Formschluss zwischen Haltevorrichtung 1 und Sprinklerdüse im Bereich der Ausnehmung 10 ergibt, was von Vorteil ist, wenn im Zuge von Befestigungsmaßnahmen an der Sprinklerdüse ein Drehmoment wirksam ist.

Die seitlich, d. h. zum freien Ende der Schenkel 2, 3 hin offene Ausbildung der vorstehend beschriebenen Ausnehmung 10 führt dazu, dass der in Figur 2 gezeigte zweite Schenkel 3 der Haltevorrichtung 1 und entsprechend auch der (nicht erkennbare) erste Schenkel 2 (vgl. Figur 1) jeweils aus zwei zueinander parallelen Teilschenkeln 3.1, 3.2 gebildet sind. Jeder der beiden Teilschenkel 3.1, 3.2 weist an seinem freien Ende die weiter oben beschriebene Raststruktur 6 auf, während die in Figur 2 nicht weiter dargestellten Teilschenkel des ersten Schenkels 2 an ihren freien Enden jeweils die ebenfalls weiter oben beschriebene Raststruktur 5 aufweisen, welche mit der Raststruktur 6 des zweiten Schenkels 3 zusammenwirkt.

Jeder der Teilschenkel 3.1, 3.2 weist längst zu seiner Erstreckung eine Versteifungsstruktur in Form einer Sicke 12.1, 12.2 zu Verstärkungszwecken auf. Entsprechendes gilt auch für den ersten Schenkel 2; die dort vorhandenen Sicken sind beispielsweise in Figur 1 und Figur 3 erkennbar und dort mit dem Bezugszeichen 13.1, 13.2 bezeichnet.

Bei erneuter Bezugnahme auf die Figur 1 weist die Haltevorrichtung 1 im Bereich der Abwinkelung 8 des zweiten Schenkels 3 eine in dem vorzugsweise metallischen Grundmaterial der Haltevorrichtung 1 ausgebildete Gewindestruktur 14 auf, die zum unverlierbaren Aufnehmen bzw. Einschrauben eines Schraubmittels 15 in Form einer Blechschraube dient. Auf deren Funktion wird weiter unten anhand von Figur 5 noch genauer eingegangen. Wie der Figur 2 ergänzend zu entnehmen ist, ist die Gewindestruktur 14 an jedem der beiden Teilschenkel 3.1, 3.2 vorhanden.

Die bereits erwähnte Figur 3 zeigt die Haltevorrichtung 1 gemäß Figur 1 in ihrem geschlossenen Zustand, der auch als Montagezustand bezeichnet wird. Hierbei greift der zweite Schenkel 3 mit seiner Rückbiegung 9 hinter bzw. in die Umbiegung 7 des ersten Schenkels 2, so dass der erste Schenkel 2 und der zweite Schenkel 3 der Haltevorrichtung 1 miteinander verrastet sind. In diesem Montagezustand erstrecken sich die beiden Schenkel 2, 3 der Haltevorrichtung 1 parallel zueinander. Die Einschraubrichtung des Schraubmittels 15 ist im Montagezustand der Haltevorrichtung gemäß Figur 1 parallel sowohl zu dem ersten Schenkel 2 als auch zu dem zweiten Schenkel 3 orientiert und verläuft in Richtung des dritten, mittleren Schenkels 4 der Haltevorrichtung 1.

Wie bereits mehrfach angedeutet, ist die Haltevorrichtung 1 vorzugsweise in einem Metallblech ausgebildet, dessen Materialart und/oder Materialdicke so gewählt sind, dass ein Zubiegen der Haltevorrichtung 1 aus dem in Figur 1 gezeigten Lieferzustand in den Montagezustand gemäß Figur 3 per Hand möglich ist. Es hat sich herausgestellt, dass es in diesem Zusammenhang vorteilhaft ist, die Haltevorrichtung mit einer Blechdicke von lediglich 1,25 mm auszubilden. Aufgrund der Orientierung der beiden Schenkel der Haltevorrichtung quer zur Sprinklerdüse tut dies der Stabilität der Anordnung allerdings keinen Abbruch.

Wie ebenfalls bereits angesprochen, dient die Haltevorrichtung 1 dazu, eine Sprinklerdüse bzw. eine Sprinklermuffe an einer Tragstruktur eines Sprinklersystems zu befestigen. Derartige Tragstrukturen sind in der Regel als Vierkantrohre mit einer Kantenlänge von beispielsweise 15 mm ausgebildet, wie bei Bezugszeichen 16 in den Figuren 4 und 5 dargestellt. Dort ist bei Bezugszeichen 17 weiterhin eine Sprinklerdüse mit Muffe 18, Rosette 19 und Anschlussleitung 20 gezeigt. Die Sprinklermuffe 18 weist eine mehrkantige, insbesondere sechskantige Außenkontur auf, an welche die Haltevorrichtung 1 mit der Innenkontur 11 ihrer Ausnehmung 10 angepasst ist, wie weiter oben anhand von Figur 2 ausführlich beschrieben. Die Längen des dritten Schenkels 4 und der Abwinkelung 8 sind vorzugsweise an die Kantenlänge des Vierkantrohrs 16 angepasst, wie dargestellt.

Wie in den Figuren 4 und 5 gezeigt, wird bei Verwendung der erfindungsgemäßen Haltevorrichtung 1 die komplett montierte und gegebenenfalls bereits auf Dichtigkeit überprüfte Sprinklerdüse 17 an der Tragstruktur 16 festgelegt, indem die in ihrem offenen Zustand gemäß Figur 1 befindliche Haltevorrichtung 1 seitlich im Bereich der Muffe 18 über die Düse 17 auf das Vierkantrohr 16 aufgeschoben wird, wobei das Vierkantrohr 16 durch die Öffnung zwischen den ersten und zweiten Schenkeln bzw. den entsprechenden Teilschenkeln der Haltevorrichtung 1 tritt, welche in den Figuren 4 und 5 aus Gründen der Übersichtlichkeit nicht explizit bezeichnet sind. Die Düse 17 ist dann mit ihrer Muffe 18 zwischen dem dritten Schenkel 4 der Haltevorrichtung 1 und der Tragstruktur 16 angeordnet.

Anschließend wird die Haltevorrichtung 1 durch Verrasten geschlossen (vgl. Figur 5), so dass der Montagezustand erreicht ist. Dann erfolgt durch Anziehen der Schraubmittel 15 gegen das Vierkantrohr 16 die endgültige Fixierung der Sprinklerdüse 17 sowohl in horizontaler als auch in vertikaler Richtung.

Ein wesentlicher Vorteil der erfindungsgemäßen Haltevorrichtung 1 ergibt sich in diesem Zusammenhang aus deren komplett einteiliger Ausgestaltung, so dass ein Monteur mit einer Hand die Sprinklerdüse 17 positionieren kann, während er mit der anderen Hand die Haltevorrichtung 1 anbringt und verschließt und dann die Schraubmittel 15 anzieht. Die Sprinklerdüse 17 kann dabei - wie bereits erwähnt - komplett vormontiert und auf ihre Dichtigkeit überprüft sein, was insbesondere deshalb von Bedeutung ist, da oftmals bei der Herstellung von Gebäuden die Deckensysteme einschließlich der Tragstrukturen für das Sprinklersystem erst ganz am Schluss der Bauarbeiten montiert werden, so dass eine anschließende Dichtigkeitsprüfung unerwünscht ist. Dies wäre dann der Fall, wenn aufgrund der verwendeten Haltevorrichtung erst nach Fixierung der Muffe 18 an dem Vierkantrohr 16 die Rosette 19 oder ähnliche Anbauteile montiert werden könnten, was durch die vorstehend beschriebene Haltevorrichtung 1 vermieden wird.

## Patentansprüche

1. Haltevorrichtung (1) für eine Sprinklerdüse (17) eines Sprinklersystems, mit einem ersten (2) und einem zweiten Schenkel (3), die an einem ihrer Enden miteinander verbunden sind und sich zumindest in einem Montagezustand der Haltevorrichtung (1) parallel zueinander erstrecken, welche jeweils eine Aufnahmestruktur (10, 11) zum Aufnehmen einer Sprinklerdüse (17) aufweisen,
**dadurch gekennzeichnet,**
**dass** die Aufnahmestrukturen (10, 11) zum Aufnehmen einer quer zu den beiden Schenkeln (2, 3) orientierten Sprinklerdüse (17) ausgebildet sind und dass die beiden Schenkel (2, 3) an ihren dem einen Ende gegenüberliegenden freien Enden komplementäre Raststrukturen (5, 6) aufweisen, mittels derer die beiden Schenkel (2, 3) in dem Montagezustand miteinander verrastbar sind.

2. Haltevorrichtung (1) nach Anspruch 1,
**dadurch gekennzeichnet,**
**dass** die Aufnahmestruktur zum Aufnehmen der Sprinklerdüse (17) als wenigstens eine Ausnehmung (10) in jedem der beiden Schenkel (2, 3) ausgebildet ist, so dass jeder der beiden Schenkel (2, 3) aus wenigstens zwei Teilschenkeln (3.1, 3.2) gebildet ist.

3. Haltevorrichtung (1) nach Anspruch 2,
**dadurch gekennzeichnet,**
**dass** jeder Teilschenkel (3.1, 3.2) entsprechende Raststrukturen (6) aufweist.

4. Haltevorrichtung (1) nach Anspruch 2 oder 3,
**dadurch gekennzeichnet,**
**dass** die Ausnehmung (10) zumindest teilweise eine Innenkontur (11) aufweist, welche einer Außenkontur (18) der Sprinklerdüse (17) entspricht.

5. Haltevorrichtung (1) nach wenigstens einem der Ansprüche 1 bis 4,
**dadurch gekennzeichnet,**
**dass** die beiden Schenkel (2, 3) über einen dritten Schenkel (4) miteinander verbunden sind, so dass sich zumindest im Montagezustand ein U-förmiges Querschnittsprofil der Haltevorrichtung (1) ergibt, wobei der Abstand zwischen den beiden Schenkeln (2, 3) im Wesentlichen einer entsprechenden Abmessung einer Tragstruktur des Sprinklersystems entspricht, insbesondere der Dicke eines Vierkantrohrs (16) des Sprinklersystems.

6. Haltevorrichtung (1) nach mindestens einem der Ansprüche 1 bis 5,
**dadurch gekennzeichnet,**
**dass** wenigstens einer der beiden Schenkel (2, 3) wenigstens eine Versteifungsstruktur (13.1, 13.2; 12.1, 12.2) aufweist, vorzugsweise wenigstens eine Versteifungsstruktur je Teilschenkel (3.1, 3.2) gemäß Anspruch 2, die längs zu seiner Erstreckung ausgebildet ist.

7. Haltevorrichtung (1) nach mindestens einem der Ansprüche 1 bis 6,
**dadurch gekennzeichnet,**
**dass** die komplementären Raststrukturen einerseits (5) aus einer Umbiegung (7) des ersten Schenkels (2) nach innen in Richtung des zweiten Schenkels (3) und andererseits (6) aus einer Abwinkelung (8) des zweiten Schenkels (3) in Richtung des ersten Schenkels (2) mit endständiger Rückbiegung (9) des zweiten Schenkels (3) nach außen in Richtung der Abwinkelung (8) gebildet sind, wobei der zweite Schenkel (3) im Montagezustand mit seiner Rückbiegung (9) in die Umbiegung (7) des ersten Schenkels (2) eingreift.

8. Haltevorrichtung (1) nach Anspruch 7,
**dadurch gekennzeichnet,**
**dass** eine Abmessung der Abwinkelung (8) im Wesentlichen dem Abstand bzw. der Abmessung gemäß Anspruch 5 entspricht.

9. Haltevorrichtung (1) nach Anspruch 7 oder 8,
**dadurch gekennzeichnet,**
**dass** im Bereich der Abwinkelung (8) wenigstens eine Gewindestruktur (14) zum Einschrauben eines Schraubmittels (15) vorgesehen ist.

10. Haltevorrichtung (1) nach Anspruch 9,
**dadurch gekennzeichnet,**
**dass** die Gewindestruktur (14) derart angeordnet ist, dass das Schraubmittel (15) im Wesentlichen parallel zu den beiden Schenkeln (2, 3) im Montagezustand geführt ist.

11. Haltevorrichtung (1) nach Anspruch 9 oder 10,
**dadurch gekennzeichnet,**
**dass** das Schraubmittel (15) als Blechschraube ausgebildet ist.

12. Haltevorrichtung (1) nach mindestens einem der Ansprüche 1 bis 11,
**dadurch gekennzeichnet,**
**dass** die Haltevorrichtung (1) vor Montage in einem offenen Lieferzustand vorliegt, in dem die Raststrukturen (5, 6) frei sind und die beiden Schenkel (2, 3) schräg zueinander verlaufen, so dass im Bereich ihrer freien Enden eine Öffnung zwischen den beiden Schenkeln (2, 3) verbleibt, über welche die Haltevorrichtung (1) auf eine Tragstruktur, insbesondere ein Vierkantrohr (16), des Sprinklersystems aufsetzbar ist.

## Claims

1. Holding device (1) for a sprinkler nozzle (17) of a sprinkler system, having a first arm (2) and a second arm (3) which are joined to one another at one of their ends and which run parallel to one another at least in an assembled state of the holding device (1), which arms each have a receiving structure (10, 11) for receiving a sprinkler nozzle (17),
**characterised in that**
the receiving structures (10, 11) are constructed for receiving a sprinkler nozzle (17) oriented transversely with respect to the two arms (2, 3), and the two arms (2, 3) have, at their free ends opposite the first end, complementary locking structures (5, 6) by means of which the two arms (2, 3) are lockable to one another in the assembled state.

2. Holding device (1) according to claim 1,
**characterised in that**
the receiving structure for receiving the sprinkler nozzle (17) is in the form of at least one recess (10) in each of the two arms (2, 3), so that each of the two arms (2, 3) is formed from at least two sub-arms (3.1, 3.2).

3. Holding device (1) according to claim 2,
**characterised in that**
each sub-arm (3.1, 3.2) has corresponding locking structures (6).

4. Holding device (1) according to claim 2 or 3,
**characterised in that**
the recess (10) has, at least in part, an internal contour (11) which corresponds to an external contour (18) of the sprinkler nozzle (17).

5. Holding device (1) according to at least one of claims 1 to 4,
**characterised in that**
the two arms (2, 3) are joined to one another by way of a third arm (4) so that, at least in the assembled state, the holding device (1) has a U-shaped cross-sectional profile, the distance between the two arms (2, 3) corresponding substantially to a corresponding dimension of a supporting structure of the sprinkler system, especially to the thickness of a square tube (16) of the sprinkler system.

6. Holding device (1) according to at least one of claims 1 to 5,
**characterised in that**
at least one of the two arms (2, 3) has at least one reinforcing structure (13.1, 13.2; 12.1, 12.2), preferably at least one reinforcing structure per sub-arm (3.1, 3.2) according to claim 2, which is formed along the length thereof.

7. Holding device (1) according to at least one of claims 1 to 6,
**characterised in that**
the complementary locking structures are formed on the one hand (5) by a portion (7) of the first arm (2) that is bent over inwards in the direction of the second arm (3) and on the other hand (6) by a portion (8) of the second arm (3) that is angled in the direction of the first arm (2) with an end portion (9) of the second arm (3) being bent back outwards in the direction of the angled portion (8), the bent-back portion (9) of the second arm (3) engaging in the bent-over portion (7) of the first arm (2) in the assembled state.

8. Holding device (1) according to claim 7,
**characterised in that**
a dimension of the angled portion (8) corresponds substantially to the distance or the dimension according to claim 5.

9. Holding device (1) according to claim 7 or 8,
**characterised in that**
in the region of the angled portion (8) there is provided at least one threaded structure (14) for screwing in a screw means (15).

10. Holding device (1) according to claim 9,
**characterised in that**
the threaded structure (14) is arranged in such a way that the screw means (15) extends substantially parallel to the two arms (2, 3) in the assembled state.

11. Holding device (1) according to claim 9 or 10,
**characterised in that**
the screw means (15) is in the form of a self-tapping screw.

12. Holding device (1) according to at least one of claims 1 to 11,
**characterised in that**
prior to assembly, the holding device (1) is in an open, as-supplied condition in which the locking structures (5, 6) are free and the two arms (2, 3) run at an angle to one another so that, in the region of their free ends, an opening remains between the two arms (2, 3) by way of which the holding device (1) is mountable on a supporting structure, especially a square tube (16), of the sprinkler system.

## Revendications

1. Dispositif de retenue (1) destiné à une buse d'aspersion (17) d'un système asperseur, comprenant des première (2) et deuxième (3) branches qui sont reliées l'une à l'autre par l'une de leurs extrémités, s'étendent parallèlement l'une à l'autre au moins à l'état monté dudit dispositif de retenue (1), et sont respectivement munies d'une structure réceptrice (10, 11) affectée à la réception d'une buse d'aspersion (17),
**caractérisé par le fait**
**que** les structures réceptrices (10, 11) sont réalisées en vue de recevoir une buse d'aspersion (17) orientée transversalement par rapport aux deux branches (2, 3) ; et par le fait que lesdites deux branches (2, 3) comportent, à leurs extrémités libres tournées à l'opposé de l'extrémité précitée, des structures complémentaires de crantage (5, 6) au moyen desquelles lesdites deux branches (2, 3) peuvent être mutuellement encliquetées à l'état monté.

2. Dispositif de retenue (1) selon la revendication 1,
**caractérisé par le fait**
**que** la structure réceptrice, affectée à la réception de la buse d'aspersion (17), se présente comme au moins un évidement (10) pratiqué dans chacune des deux branches (2, 3), de sorte que chacune desdites deux branches (2, 3) est formée d'au moins deux branches partielles (3.1, 3.2).

3. Dispositif de retenue (1) selon la revendication 2,
**caractérisé par le fait**
**que** chaque branche partielle (3.1, 3.2) offre des structures de crantage (6) correspondantes.

4. Dispositif de retenue (1) selon la revendication 2 ou 3,
**caractérisé par le fait**
**que** l'évidement (10) possède, au moins partiellement, un profil intérieur (11) correspondant à un profil extérieur (18) de la buse d'aspersion (17).

5. Dispositif de retenue (1) selon au moins l'une des revendications 1 à 4,
**caractérisé par le fait**
**que** les deux branches (2, 3) sont reliées l'une à l'autre par l'intermédiaire d'une troisième branche (4), ce qui confère audit dispositif de retenue (1), au moins à l'état monté, un profil de section transversale configuré en U, sachant que la distance séparant lesdites deux branches (2, 3) concorde, pour l'essentiel, avec une cote correspondante d'une structure de support du système asperseur, en particulier l'épaisseur d'une tubulure carrée (16) dudit système asperseur.

6. Dispositif de retenue (1) selon au moins l'une des revendications 1 à 5,
**caractérisé par le fait**
**qu'**au moins l'une des deux branches (2, 3) présente au moins une structure de rigidification (13.1, 13.2 ; 12.1, 12.2), de préférence au moins une structure de rigidification dédiée à chaque branche partielle (3.1, 3.2) conforme à la revendication 2, qui est ménagée le long de son étendue.

7. Dispositif de retenue (1) selon au moins l'une des revendications 1 à 6,
**caractérisé par le fait**
**que** les structures complémentaires de crantage comprennent, d'un côté (5), un cintrage (7) de la première branche (2) qui pointe vers l'intérieur en direction de la deuxième branche (3) et, de l'autre côté (6), un coude (8) de ladite deuxième branche (3) qui pointe vers ladite première branche (2), une zone extrême (9) de ladite deuxième branche (3) étant recourbée vers l'extérieur, en direction dudit coude (8), ladite deuxième branche (3) pénétrant par sa zone recourbée (9), à l'état monté, dans ledit cintrage (7) de ladite première branche (2).

8. Dispositif de retenue (1) selon la revendication 7,
**caractérisé par le fait**
**qu'**une cote du coude (8) correspond, pour l'essentiel, à la distance ou à la cote respectivement conforme à la revendication 5.

9. Dispositif de retenue (1) selon la revendication 7 ou 8,
**caractérisé par le fait**
**qu'**au moins une structure (14) à filetage est prévue, dans la région du coude (8), pour le vissage d'un moyen vissable (15).

10. Dispositif de retenue (1) selon la revendication 9,
**caractérisé par le fait**
**que** la structure (14) à filetage est agencée de telle manière que le moyen vissable (15) soit, pour l'essentiel, guidé parallèlement aux deux branches (2, 3) à l'état monté.

11. Dispositif de retenue (1) selon la revendication 9 ou 10,
**caractérisé par le fait**
**que** le moyen vissable (15) est réalisé sous la forme d'une vis à tôle.

12. Dispositif de retenue (1) selon au moins l'une des revendications 1 à 11,
**caractérisé par le fait**
**que** ledit dispositif de retenue (1) se présente, préalablement au montage, à l'état de livraison ouvert dans lequel les structures de crantage (5, 6) ne sont pas activées et les deux branches (2, 3) s'étendent à l'oblique l'une vis-à-vis de l'autre, de sorte qu'il subsiste entre lesdites deux branches (2, 3), dans la région de leurs extrémités libres, un orifice par l'intermédiaire duquel ledit dispositif de retenue (1) peut être mis en place sur une structure de support du système asperseur, en particulier une tubulure carrée (16).
